# EUROPÄISCHE PATENTSCHRIFT

(11) **EP 3 753 710 B1**
(45) Veröffentlichungstag und Bekanntmachung des Hinweises auf die Patenterteilung: **03.01.2024**
(21) Anmeldenummer: 19181794.9
(22) Anmeldetag: 21.06.2019
(51) Int. Cl.: B29C 65/18, B29C 65/36, B29C 65/78, B29L 23/20

(54) **OPTIMIERTE KÜHLEINRICHTUNG, VORRICHTUNG UND VERFAHREN ZUM HERSTELLEN VON TUBENKÖRPERN**
OPTIMIZED COOLING DEVICE, DEVICE AND METHOD FOR PRODUCING TUBE BODIES
SYSTÈME DE REFROIDISSEMENT OPTIMISÉ, DISPOSITIF ET PROCÉDÉ DE FABRICATION DE CORPS TUBULAIRES

(43) Veröffentlichungstag der Anmeldung: 23.12.2020
(73) Patentinhaber: PackSys Global AG, 8630 Rüti ZH (CH)
(72) Erfinder: Esser, Ulrich, 8630 Rüti (CH); Schuhn, Daniel, 8049 Zürich (CH); Bänninger, Marcel, 8308 Illnau (CH)
(74) Vertreter: Patent- und Rechtsanwälte Behrmann Wagner PartG mbB

(56) Entgegenhaltungen:
- EP-A1- 2 522 585
- EP-A1- 3 398 753
- EP-B1- 2 522 585
- DE-U1-202011 050 418
- US-A- 2 934 130
- US-A- 4 067 761
- US-A- 4 074 504
- US-A- 4 218 863

## Beschreibung

Die vorliegende Erfindung betrifft eine Vorrichtung und ein Verfahren zur Herstellung von Tubenkörpern für Verpackungstuben aus einer schweißbaren Materialbahn. Insbesondere betrifft die vorliegende Erfindung eine derartige Vorrichtung und ein Verfahren aufweisend eine verbesserte Kühleinrichtung.

Vorrichtungen zum Herstellen von Tubenkörpern sind aus dem Stand der Technik bekannt. Diese umfassen im Allgemeinen einen sich in Axialrichtung erstreckenden Dorn, um welchen eine ein- oder mehrlagige Materialbahn, beispielsweise eine Kunststofflaminatbahn, zur Herstellung einer Rohrform umformbar ist und Schweißmittel zum Verschweißen der umgeformten Materialbahn, beispielsweise eine Induktionsschweißeinrichtung.

Bei der Verwendung einer Materialbahn mit wenigstens einer Metallschicht, beispielsweise einer Aluminiumschicht, kann die umgeformte Materialbahn durch induktives Erwärmen der Metallschicht verschweißt und anschließend abgekühlt werden. Zudem ist auch bekannt, insbesondere bei der Verwendung einer Materialbahn aus Kunststofflaminat, dass die Vorrichtung ein äußeres und vorzugsweise auch ein inneres, jeweils umlaufend antreibbares Schweißband aus Metall aufweist, zwischen denen die Materialbahn sandwichartig aufnehmbar und klemmbar ist. Mittels der durch die Schweißeinrichtung erhitzbaren Schweißbänder wird die umgeformte Materialbahn in einem Kontaktbereich erhitzt und dadurch in Längsrichtung verschweißt und anschließend wieder abgekühlt. Die Schweißbänder fixieren hierbei die Rohrform und schützen die frische Schweißnaht. Anstelle von zwei Schweißbändern kann auch nur ein Schweißband vorgesehen sein, wenn die Materialbahn auf einer dem einzigen Schweißband abgewandten Seite gegen eine ortsfeste Andruckfläche drückt. Nachteilig hierbei sind jedoch die auftretende erhöhte Reibung und ein dadurch mögliches Verschmieren der erzeugten Schweißnaht.

Bei bekannten Vorrichtungen ist zur Reibungsminimierung zwischen dem mindestens einen Schweißband und einer ortsfesten Oberfläche, entlang der das Schweißband transportiert wird, insbesondere eine Dornoberfläche oder eine Oberfläche einer Kühleinheit, üblicherweise ein PTFE (Teflon)-Streifen vorgesehen, der eine Dickenerstreckung von etwa 50-250 µm aufweist. Der PTFE-Streifen unterliegt einem natürlichen Reibverschleiß und muss daher regelmäßig ausgetauscht werden. Darüber hinaus ist der Wärmeübergang zwischen der dem Schweißband zugeordneten Oberfläche und dem Schweißband aufgrund der Dickenerstreckung und schlechten Wärmeübergänge an den Grenzflächen des PTFE-Streifens verbesserungswürdig. Anstelle PTFE können auch andere Materialen mit guten Gleiteigenschaften verwendet werden, beispielsweise hochmolekulares Polyethylen (PE-UHMW) oder Polyetheretherketon (PEEK), wobei jedoch die gleiche thermische Problematik auftritt.

Ebenfalls aus dem Stand der Technik bekannt sind mikroporöse Gasaustrittsöffnungen in einer dem Schweißband zugeordneten Oberfläche, wodurch Gas zum Erzeugen eines Gaskissens zwischen der Oberfläche und dem zugeordneten Schweißband austreten kann. Eine derartige Vorrichtung wird in der EP 2 502 725 A1 beschrieben. Das Schweißband wird hierbei durch die mikroporösen Austrittsöffnungen mit einem im Wesentlichen laminar ausgebildeten und optional gekühlten Luftstrom beaufschlagt. Da bei dieser Lösung das Schweißband keinen oder nur einen sehr geringen Kontakt mit der zugeordneten Oberfläche hat, tritt im Wesentlichen kein Reibverschleiß auf. Allerdings weist diese Lösung eine höhere Komplexität auf und ist somit relativ kostenintensiv.

Darüber hinaus hat sich gezeigt, dass die laminare Strömung zu einer unerwünscht hohen thermischen Isolierwirkung führt, wodurch ein effektiver Wärmeabtransport aus der Schweißnaht der Materialbahn negativ beeinflusst wird.

Ausgehend von dem vorgenannten Stand der Technik liegt der Erfindung die Aufgabe zugrunde, eine verbesserte Vorrichtung zum Herstellen von Tubenkörpern anzugeben, die den Wärmeübergang zwischen der Materialbahn und/oder einem der Materialbahn zugeordneten Schweißband und einer jeweils zugeordneten Oberfläche oder Umgebung zur Gewährleistung eines verbesserten Wärmeentzugs aus der Materialbahn optimiert. Gleichzeitig soll die Vorrichtung eine möglichst geringe Komplexität und damit eine einfache Herstellbarkeit aufweisen. Ferner besteht die Aufgabe darin, ein entsprechend verbessertes Verfahren zum Herstellen von Tubenkörpern anzugeben. Die zugrundeliegende Aufgabe wird durch die Vorrichtung und das Verfahren mit den Merkmalen der unabhängigen Ansprüche gelöst. Vorteilhafte Weiterbildungen der Erfindung sind in den Unteransprüchen beschrieben.

In einem ersten Aspekt betrifft die vorliegende Erfindung eine Kühleinrichtung nach Anspruch 1. In einem bevorzugten Aspekt betrifft die Erfindung eine Vorrichtung zum Herstellen von Tubenkörpern für Verpackungstuben aus einer Materialbahn, aufweisend einen sich in axialer Richtung erstreckenden Dorn, um welchen die Materialbahn zur Herstellung einer Rohrform umformbar ist, Schweißmittel zum Verschweißen der Materialbahn bevorzugt zum Verschweißen in einer Schweißzone der Materialbahn und entlang einer Transportrichtung der Materialbahn, wobei die Schweißmittel vorzugsweise in einem Schweißbereich der Vorrichtung angeordnet sind, eine den Schweißmitteln nachgelagerte Kühleinrichtung zum Abkühlen der verschweißten Materialbahn, wobei die Kühleinrichtung vorzugsweise in einem dem Schweißbereich nachgelagerten bzw. nachgeordneten Kühlbereich der Vorrichtung angeordnet ist, wobei die Kühleinrichtung einen sich entlang der Transportrichtung der Materialbahn erstreckenden Kühlkörper mit einer auf eine zu kühlende Oberfläche der Materialbahn, insbesondere der Schweißzone der Materialbahn, oder eines umlaufend antreibbaren und der Materialbahn zugeordneten Schweißbands gerichteten Kühlfläche aufweist, mit einer darin angeordneten Verwirbelungszone, die zur Bereitstellung eines verwirbelten Gasvolumenstroms zwischen der zu kühlenden Oberfläche und dem Kühlkörper ausgebildet ist.

Unter verwirbeltem Gasvolumenstrom wird vorliegend insbesondere ein turbulenter Volumenstrom bzw. Fluidstrom verstanden. Unter Schweißzone wird vorliegend ein vorzugsweise sich entlang der Transportrichtung der umgeformten Materialbahn erstreckender Bereich der umgeformten Materialbahn bzw. der Rohrform verstanden, in welchem eine Schweißnaht und somit eine stoffschlüssige Verbindung von Materialbahnenden vorliegt.

Die erfindungsgemäße Vorrichtung ermöglicht die Bereitstellung einer hinsichtlich der Kühlleistung optimierten und gleichzeitig wirtschaftlich betreibbaren Vorrichtung zur Tubenkörperherstellung, wobei im Gegensatz zu den bekannten Vorrichtungen ein deutlich verbesserter Wärmeübergang bzw. Wärmeenergieentzug aus der Materialbahn bzw. einer Schweißzone der umgeformten Materialbahn erzielt wird. Dies geschieht entweder durch direkte Zuordnung der Kühlvorrichtung zur umgeformten und verschweißten Materialbahn oder indirekt mittels Zuordnung der Kühlvorrichtung zu einem der Materialbahn zugeordneten Schweißband. Insbesondere wird durch den verwirbelten Gasvolumenstrom ein deutlich verbesserter Wärmeübergang zwischen der zu kühlenden Oberfläche und dem Kühlkörper und somit ein effizientes Abführen der Wärme, welche kurz nach dem Schweißvorgang über 200°C betragen kann, von der zu kühlenden Oberfläche ermöglicht.

Die erfindungsgemäße Vorrichtung ist zudem ausgebildet, eine kontaktfreie Kühlung der Materialbahn oder des der Materialbahn zugeordneten Schweißbandes bereitzustellen, wodurch im Gegensatz zu bekannten Vorrichtungen mit direktem metallischen Kontakt am Dorn oder mit zwischengelagertem PTFE-Streifen kein Reibverschleiß bei der Kühlung auftritt.

Der Dorn ist vorzugsweise ein sich axial erstreckender im Wesentlichen zylindrischer Körper, um welchen eine im Wesentlichen planar auf den Dorn zugeführte Materialbahn mit oder ohne geeignete Umformmittel der Vorrichtung umformbar ist. Die Materialbahn zur Herstellung der Tubenkörper ist vorzugsweise aus Kunststofflaminat und kann gegebenenfalls wenigstens eine metallische Zwischenschicht aufweisen. Die Schweißmittel der Vorrichtung sind vorzugsweise durch eine an sich bekannte Induktionsschweißeinrichtung gebildet bzw. umfassend diese. Die Schweißmittel erstrecken sich vorzugsweise parallel zur umgeformten Materialbahn innerhalb eines Schweißbereichs der Vorrichtung. Die Schweißmittel sind vorzugsweise ausgebildet, eine zur hergestellten Rohrform bzw. umgeformten Materialbahn achsparallele Schweißnaht herzustellen.

Die Verwirbelungszone ist derart ausgebildet, die zu kühlende Oberfläche der Materialbahn oder des Schweißbandes mit einem verwirbelten Gasvolumenstrom zu beaufschlagen. Die Verwirbelungszone ist derart angeordnet, dass der verwirbelte Gasvolumenstrom wenigstens teilweise auf eine zu kühlende Oberfläche der Schweißzone der Materialbahn bzw. des Schweißbands trifft. In einer besonders bevorzugten Ausführungsform erstreckt sich die Verwirbelungszone parallel und/oder mittig zu einer dieser zugeordneten Materialbahn, insbesondere zu einer Schweißzone der Materialbahn, bzw. zu einem dieser zugeordneten Schweißband.

Die Vorrichtung weist vorzugsweise eine Gasvolumenstromzufuhr auf, mittels welcher ein vorzugsweise kontinuierlicher Gasvolumenstrom der Verwirbelungszone zugeführt werden kann. Die Vorrichtung kann hierfür Druckgasmittel aufweisen, insbesondere Druckluftmittel, welche mit der Kühleinrichtung zur Bereitstellung des Gasvolumenstroms und insbesondere einem Druckluftvolumenstrom zur Beaufschlagung der Materialbahn oder eines der Materialbahn zugeordneten Schweißbandes verbunden sind. Optional kann die Vorrichtung Gastemperiermittel aufweisen, welche zum Kühlen des bereitgestellten Gasvolumenstroms ausgebildet sind. Die Druckgasmittel können eine Druckgasflasche, insbesondere Druckluftflasche, umfassen, die über eine entsprechende Gasleitung fluidleitend mit der Verwirbelungszone verbunden sind. Bevorzugt umfassen die Druckgasmittel einen Druckgaskompressor, insbesondere einen Druckluftkompressor, welchem zur Vergleichmäßigung des Gasvolumenstroms ein Druckgasspeicher, insbesondere ein Druckgastank, nachgeordnet sein kann.

Die Vorrichtung kann wenigstens ein umlaufend antreibbares Schweißband aufweisen, welches vorzugsweise den Schweißbereich und einen nachgelagerten Kühlbereich der Vorrichtung durchläuft. Das Schweißband ist vorzugsweise dazu ausgebildet, einen gleichmäßigen Wärmeeintrag beim Durchlaufen der Schweißmittel bzw. des Schweißbereichs zu ermöglichen. Das Schweißband ist vorzugsweise aus Metall oder aus Kunststoff mit wenigstens einer elektrisch leitfähigen Schicht. Die Kühleinrichtung ist in diesem Fall vorzugsweise dem Schweißband bzw. einer zu kühlenden Oberfläche des Schweißbandes zugeordnet.

In einer weiteren bevorzugten Ausführungsform weist die Vorrichtung zwei umlaufend antreibbare Schweißbänder auf, welche derart ausgebildet sind, dass die umgeformte Materialbahn bzw. die Rohrform wenigstens teilweise, insbesondere eine zu verbindende Schweißzone der Rohrform, zwischen den Schweißbändern sandwichartig aufnehmbar ist. Die Schweißbänder umfassen vorzugsweise ein äußeres und ein inneres Schweißband. Diese sind vorzugsweise dazu ausgebildet, die Rohrform in an sich bekannter Weise während der Tubenherstellung zu schützen und/oder einen gleichmäßigen Wärmeeintrag beim Durchlaufen der Schweißmittel bzw. des Schweißbereichs zu ermöglichen. Die Schweißbänder sind vorzugsweise aus Metall oder aus Kunststoff mit wenigstens einer elektrisch leitfähigen Schicht. Die erfindungsgemäße Kühleinrichtung ist vorzugsweise wenigstens einem der Schweißbänder zugeordnet. Die erfindungsgemäße Vorrichtung kann auch wenigstens zwei Kühleinrichtungen aufweisen, die dann beiden Schweißbändern zugeordnet sind. Bei einer von der Kühleinrichtung mit Gasvolumenstrom beaufschlagten zu kühlenden Oberfläche handelt es sich vorzugsweise um die der Materialbahn abgewandte Seite bzw. Oberfläche des Schweißbandes.

Erfindungsgemäß ist die Verwirbelungszone durch eine Ausnehmung in einer der zu kühlenden Oberfläche der Materialbahn bzw. des Schweißbands zugeordneten Kühlfläche der Kühleinrichtung gebildet. Die Ausnehmung weist eine sich von einem Zufuhrschlitz der Ausnehmung zur kühlenden Oberfläche der zugeordneten Materialbahn bzw. des zugeordneten Schweißbandes hin und vorzugsweise in Richtung senkrecht zu einer Materialbahntransportrichtung bzw. Schweißbandtransportrichtung erweiternde Breite auf. Die Ausnehmung ist eine vorzugsweise im Wesentlichen konkav geformte Ausnehmung in einer vorzugsweise endseitigen Kühlfläche der Kühleinrichtung 2.

Die Ausnehmung erstreckt sich vorzugsweise parallel zu der zu kühlenden Oberfläche der Materialbahn bzw. des Schweißbandes und/oder parallel zum Materialbahn- bzw. Schweißbandverlauf in dem Kühlbereich bzw. entlang der Kühleinrichtung. Der Zufuhrschlitz der Ausnehmung ist vorzugsweise einends der Ausnehmung im Wesentlichen gegenüber der zu kühlenden Oberfläche angeordnet. Der Zufuhrschlitz verläuft vorzugsweise im Wesentlichen parallel zur zu kühlenden Oberfläche.

In einer bevorzugten Ausführungsform weist der Kühlkörper der Kühleinrichtung eine im Wesentlichen längliche Form mit vorzuweise gleichbleibendem Querschnitt auf und ist entlang der Materialbahnverlaufsrichtung bzw. der Schweißbandverlaufsrichtung in einem Kühlbereich der Vorrichtung angeordnet. Der Kühlkörper weist vorzugsweise eine hohe Wärmeleitfähigkeit von bevorzugt über 100, mehr bevorzugt über 200 W/(m*K) auf. Der Kühlkörper ist vorzugsweise aus Metall, besonders bevorzugt aus Aluminium, geformt. Vorzuweise sind im Kühlkörper Fluidleitungen zur Bereitstellung eines Gasvolumenstroms zur Verwirbelungszone geformt.

In einer bevorzugten Ausführungsform weist die Kühleinrichtung eine vorzugsweise rückseitig zur Kühloberfläche des Kühlkörpers angeordnete und mit dem Kühlkörper in thermischer Verbindung stehende Kühlsektion auf. Die Kühlsektion ist vorzugsweise ausgebildet, den Kühlkörper aktiv zu kühlen. Dies kann beispielsweise mittels eines in der Kühlsektion geführten Kühlfluids erfolgen. Beispielsweise kann die Kühlsektion mit darin geführtem gekühlten Fluid, insbesondere Wasser, gekühlt sein. Die Kühlsektion weist vorzuweise wenigstens einen Kanal zur Kühlfluidführung auf. Die Vorrichtung kann Kühlfluidzufuhrmittel zur vorzugsweise kontinuierlichen Kühlfluidzuführung aufweisen. Das Kühlfluid weist vorzugsweise eine Temperatur zwischen 10 und 30°C auf.

Die Kühlfläche der Kühleinrichtung weist vorzugsweise beidseitig der darin angeordneten Verwirbelungszone einen parallel und benachbart zur zu kühlenden Oberfläche angeordneten Begrenzungsbereich zur Ausbildung eines vorzugsweise umlaufenden Austrittsspalts zwischen Kühlfläche und der zu kühlenden Oberfläche auf. Der Begrenzungsbereich der Kühlfläche ist vorzugsweise eine die Verwirbelungszone umgebende, plane Oberfläche, welche vorzugsweise endseitig bzw. bodenseitig der Kühleinrichtung ausgebildet ist. Der durch die Kühleinrichtung auf die zu kühlende Oberfläche bereitgestellte Gasvolumenstrom kann somit durch den Austrittsspalt in die Umgebung der Vorrichtung abgeleitet werden.

Der Austrittsspalt zwischen Kühlfläche und zu kühlender Oberfläche weist vorzugsweise eine im Wesentlichen konstante Breite bzw. Dicke von zwischen 5 und 100 µm, bevorzugt zwischen 20 und 75 µm, mehr bevorzugt zwischen 20 und 50 µm auf. Die Länge des Austrittsspalts in eine Richtung senkrecht zur Materialbahn- bzw. Schweißbandtransportrichtung ist vorzugsweise derart gewählt, dass diese mindestens das 0,9-fache, mehr bevorzugt mindestens das 1,3-fache und am bevorzugtesten mindestens das 1 ,5-fache einer maximalen Breite der Verwirbelungszone senkrecht zur Materialbahn- bzw. Schweißbandtransportrichtung beträgt. In einer bevorzugten Ausführungsform liegt die maximale Breite der Verwirbelungszone senkrecht zur Transportrichtung zwischen 1,5 und 3,5 mm, mehr bevorzugt zwischen 2,0 und 3 mm, besonders bevorzugt bei etwa 2,5mm.

Eine Breite des Zufuhrschlitzes der Kühleinrichtung senkrecht zur Materialbahn- bzw. Schweißbandtransportrichtung ist vorzugsweise derart gewählt, dass diese 5 bis 30 mal, bevorzugt 10 bis 25 so groß ist, wie die Breite bzw. Dicke des Austrittsspalts zwischen Kühlfläche und der zu kühlenden Oberfläche. In einer bevorzugten Ausführungsform weist der Zufuhrschlitz eine maximale Breite von 0,1 bis 0,5mm, mehr bevorzugt von 0,2 bis 0,4 mm auf.

Versuche haben gezeigt, dass die oben genannten Dimensionen eine besonders bevorzugte Ausbildung des verwirbelten Gasvolumenstroms in der Verwirbelungszone ermöglichen. Insbesondere wird hierdurch eine besonders wirtschaftliche Betriebsart der Kühleinrichtung ermöglicht, bei der weder ein zu hohes und damit unwirtschaftliches Gasvolumen bzw. Luftmenge benötigt wird, noch wird eine übermäßige Oberflächengenauigkeit und Grenzflächengüte sowie Ausrichtung der einzelnen Komponenten der Vorrichtung zueinander vorausgesetzt, was wiederum die Fertigungskosten deutlich erhöhen würde.

Die Vorrichtung und/oder Druckgasmittel der Vorrichtung sind vorzugsweise derart ausgebildet, dass die zu kühlende Oberfläche mit einem Gasvolumenstrom aufweisend eine Geschwindigkeit von 50 bis 400 km/h, mehr bevorzugt von 100 bis 300 km/h beaufschlagt wird. Die Geschwindigkeit des Gasvolumenstroms bzw. der bereitgestellte Gasdruck kann mit an sich bekannten Einstellmitteln eingestellt bzw. adaptiert werden.

Die Kühleinrichtung bzw. der Kühlkörper der Kühleinrichtung kann relativ zur zugeordneten und zu kühlenden Oberfläche ortsfest positioniert sein. Hierbei kann die oben genannte Breite bzw. Dicke des Austrittsspalts selektiv auf einen gewünschten Wert eingestellt werden.

In einer weiteren bevorzugten Ausführungsform ist die Kühleinrichtung wenigstens teilweise beweglich zur zugeordneten Oberfläche angeordnet bzw. gelagert. Die Kühleinrichtung kann beispielsweise Kraftbeaufschlagungsmittel wie beispielsweise Federmittel oder einen Druckluftzylinder aufweisen, welche ausgebildet sind, die Kühlfläche der Kühleinrichtung und insbesondere einen die Verwirbelungszone umgebenden Begrenzungsbereich der Kühlfläche gegen die zu kühlende Oberfläche vorzuspannen. In einem nicht aktivierten Zustand der Kühleinrichtung, d.h. bei fehlendem Gasvolumenstrom ist die Kühleinrichtung in Kontakt mit der zugeordneten zu kühlenden Oberfläche, insbesondere mittels des oben genannten die Verwirbelungszone umgebenden Begrenzungsbereich der Kühlfläche. Bei Anlegen eines Gasvolumenstroms bildet sich ein Druck innerhalb der Verwirbelungszone aus, welcher den vorgespannten Kraftbeaufschlagungsmitteln entgegenwirkt und wodurch sich ein Austrittsspalt an dem die Verwirbelungszone umgebenden Begrenzungsbereich ausbildet. Die Kühleinrichtung ist damit derart ausgebildet, dass sich beim Betrieb der Kühleinrichtung ein Gaskissen zwischen der zu kühlenden Oberfläche und der Kühleinrichtung, insbesondere in einem Bereich der Verwirbelungszone und einem die Verwirbelungszone umgebenden Begrenzungsbereich der Kühleinrichtung, durch die Beaufschlagung mit dem Gasvolumenstrom ausbildet. Die Kraftbeaufschlagungsmittel und/oder der Gasvolumenstrom sind hierbei vorzugsweise derart aufeinander abgestimmt und/oder einstellbar, dass sich die oben genannten bevorzugten Werte für die Breite bzw. Dicke des Austrittsspalts zwischen Kühleinrichtung und zu kühlender Oberfläche einstellen. Zudem weist die Vorrichtung vorzugsweise Einstellmittel für den Gasdruck und/oder den Volumenstrom auf, welche eine diesbezügliche Einstellung der Dickenerstreckung des Gaskissens in einem Bereich zwischen der zu kühlenden Oberfläche und einem die Verwirbelungszone umgebenden Begrenzungsbereich der Kühlfläche der Kühleinrichtung ermöglichen.

Die Kühleinrichtung kann auch wenigstens teilweise schwimmend in der Vorrichtung gelagert sein. Insbesondere kann die Kühleinrichtung ausgebildet sein, ein Verkippen um wenigstens +/-2°, mehr bevorzugt wenigstens +/-5° gegenüber einer idealen vorzugsweise vertikalen Ausrichtung in der Vorrichtung zu ermöglichen. Hierdurch kann sich die Kühleinrichtung automatisch an eine leicht abweichende Ausrichtung der zu kühlenden Oberfläche zur Verwirbelungszone und dem diese umgebenden Begrenzungsbereich ausrichten.

Der mittels der erfindungsgemäßen Vorrichtung erzielte Wärmeübergang bzw. Wärmeenergieentzug aus einer Schweißnaht der verschweißten Materialbahn bzw. der Schweißzone, in der die Schweißnaht angeordnet ist, oder aus dem der Materialbahn zugeordneten Schweißband durch die Gasvolumenstrombeaufschlagung auf die zu kühlende Oberfläche liegt vorzugsweise bei mehr als 500 W/m²K, mehr bevorzugt bei mehr als 1000 W/m²K.

In einer bevorzugten Ausführungsform weist die Kühleinrichtung und insbesondere der Kühlkörper der Kühleinrichtung eine mit einem Zufuhrschlitz zur Verwirbelungszone fluidtechnisch verbundene Versorgungskammer auf, welche mit einer Gaszufuhr und/oder den Druckgasmitteln der Vorrichtung verbindbar bzw. verbunden sind. Die Versorgungskammer kann eine sich länglich erstreckende zylindrische Kammer sein, welche vorzugsweise einen konstanten Durchmesser aufweist. Die Kühleinrichtung kann zudem eine Ausgleichskammer aufweisen, welche zwischen der Versorgungskammer und dem Zufuhrschlitz angeordnet ist und ein geringeres Volumen als die Versorgungskammer aufweist. Die Ausgleichskammer kann eine sich länglich erstreckende zylindrische Kammer sein, welche vorzugsweise einen konstanten Durchmesser aufweist. Die Ausgleichskammer kann mit der Versorgungskammer mittels eines sich vorzugsweise länglich erstreckenden Spalts verbunden sein. Dieser weist vorzugsweise eine Breite zwischen 0,3 und 3mm, mehr bevorzugt zwischen 0,5 und 1,5mm auf.

In einer bevorzugten Ausführungsform kann die Vorrichtung zusätzlich eine an sich bekannte Vereinzelungseinrichtung aufweisen, welche zur Vereinzelung der umgeformten und verschweißten Materialbahn in einzelne Tubenkörperabschnitte ausgebildet ist.

In einem weiteren Aspekt betrifft die vorliegende Erfindung ein Verfahren nach Anspruch 15.

In einer bevorzugten Ausführungsform wird bei dem erfindungsgemäßen Verfahren ein Gaskissen zwischen der zu kühlenden Oberfläche und der Kühleinrichtung, insbesondere in einem Bereich der Verwirbelungszone und in einem die Verwirbelungszone umgebenden Begrenzungsbereich der Kühlfläche der Kühleinrichtung ausgebildet. Dies erfolgt vorzugsweise derart, dass sich ein Austrittsspalt mit einer Breite bzw. Dicke zwischen 5 und 100 µm, bevorzugt zwischen 20 und 75 µm, und mehr bevorzugt zwischen 20 und 50 µm ergibt. Hierbei kann der anliegende bzw. in die Verwirbelungszone eingeleitete Gasvolumenstrom und/oder Gasdruck mittels vorgesehener Einstellmittel zur Erreichung der bevorzugten Austrittsspaltbreite selektiv und entgegen einer eventuell anliegenden Vorspannkraft angepasst werden.

Zur Vermeidung von Wiederholungen wird auf die obige Beschreibung der erfindungsgemäßen Vorrichtung verwiesen.

Weitere Vorteile, Merkmale und Einzelheiten der Erfindung ergeben sich aus der nachfolgenden Beschreibung bevorzugter Ausführungsbeispiele sowie anhand der Zeichnungen, diese zeigen in:
- Fig. 1a:: eine stark schematisierte Längsschnittansicht durch eine Vorrichtung zum Herstellen von Tubenkörpern für Verpackungstuben;
- Fig. 1b:: eine Querschnittsansicht durch die Vorrichtung gemäß Fig. 1a;
- Fig. 2: eine perspektivische Seitenansicht einer bevorzugten Ausführungsform der erfindungsgemäßen Kühleinrichtung mit einem zugeordneten Schweißband;
- Fig. 3a: eine Querschnittsansicht durch die Kühleinrichtung gemäß einer bevorzugten Ausführungsform;
- Fig. 3b: eine Detailansicht der bevorzugten Ausführungsform gemäß Fig. 3a;
- Fig. 3c: eine Detailansicht der bevorzugten Ausführungsform gemäß Fig. 3a mit dargestelltem Volumenstrom;
- Fig. 3d: eine Detailansicht einer weiteren bevorzugten Ausführungsform der Kühleinrichtung bei Anwendung zur direkten Kühlung einer Schweißzone bzw. der in der Schweißzone befindlichen Schweißnaht einer Materialbahn,
- Fig. 4a,4b: Querschnittsansichten einer weiteren bevorzugten Ausführungsform der erfindungsgemäßen Kühleinrichtung, und
- Fig. 5: eine Querschnittsansicht durch eine weitere bevorzugte Ausführungsform einer Kühleinrichtung zur Kühlung eines inneren Schweißbands einer Vorrichtung gemäß Fig. 1.

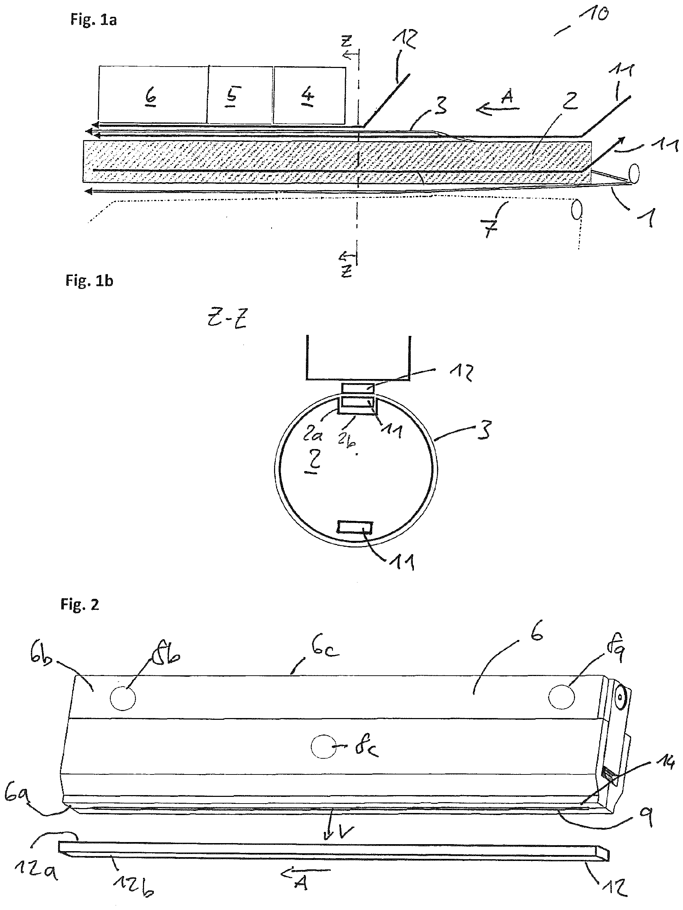

**Fig. 1a** zeigt einen stark schematisierten Längsschnittansicht einer Vorrichtung 10 zum Herstellen von Tubenkörpern. Die Vorrichtung 10 umfasst einen langgestreckten Dorn 2, um den mit hier als Formband ausgebildeten Formmitteln 7 eine hier als Kunststofflaminat ausgebildete Materialbahn 1 zu einer im Wesentlichen runden Rohrform 3 umformbar ist, die dann mit Schweißmitteln 4, insbesondere einer Induktionsschweißeinrichtung, mit sich selbst verschweißbar ist. Mit den Schweißmitteln 4 werden die in einer Schweißzone aneinander anstoßenden oder einander überlappenden Randbereiche der zugeführten Materialbahn miteinander verschweißt, und es entsteht eine sich entlang des Dorns 2 erstreckende bzw. entlang des Dorns 2 wandernde Schweißnaht. In dem gezeigten Ausführungsbeispiel ist den Schweißmitteln 4 in einer Transportrichtung A der Materialbahn 1 eine Presseinrichtung 5 nachgeordnet, die einen einstellbaren Anpressdruck auf die frisch verschweißte Rohrform 3 aufbringt. Der Presseinrichtung 5 wiederum ist eine Kühleinrichtung 6 zum Abkühlen der Rohrform 3 und insbesondere der zuvor erzeugten Schweißnaht nachgeordnet.

Optional weist die Vorrichtung wenigstens eines, vorzugsweise zwei Schweißbänder 11,12 auf, nämlich ein sogenanntes inneres Schweißband 11, welches abschnittsweise innerhalb des Dorns 2 verläuft, und ein äußeres Schweißband 12. Inneres und äußeres Schweißband 11, 12 nehmen die zur Rohrform 3 umgeformte Materialbahn 1 sandwichartig zwischen sich auf und werden umlaufend angetrieben, vorzugsweise zumindest näherungsweise mit der Materialbahngeschwindigkeit. Sowohl bei dem inneren Schweißband 11 als auch bei dem äußeren Schweißband 12 handelt es sich um Metallbänder, die gegenüber feststehenden Oberflächen bewegt werden. Dabei kann das innere Schweißband 11 auf einer inneren Oberfläche 2b des Dorns 2 wenigstens teilweise aufliegen oder ist entlang dieser geführt, wie in der Fig. 1b gezeigt. Das äußere Schweißband 12 kann wenigstens teilweise entlang einer unten näher beschrieben Oberfläche 6a der Kühleinrichtung 6 geführt werden.

**Fig. 1b** zeigt eine Querschnittsansicht entlang der Schnittebene Z-Z in Fig. 1a der Vorrichtung 10. Zu erkennen ist der langgestreckte Dorn 2, um den die umgeformte Materialbahn 1 bzw. die Rohrform 3 gelegt ist. Das innere und äußere Schweißband 11,12 umschließen die dazwischen angeordneten anstoßenden oder einander überlappenden Randbereiche der Rohrform 3 und bilden somit eine zu erhitzende Schweißzone in der Materialbahn 1. Im Dorn 2 ist eine als Längsnut ausgebildete Nut 2a vorgesehen, deren Nutboden 2b in dem gezeigten Ausführungsbeispiel die innere Oberfläche bildet, auf der das innere Schweißband 11 wenigstens teilweise aufliegt bzw. entlang welchem das innere Schweißband geführt ist.

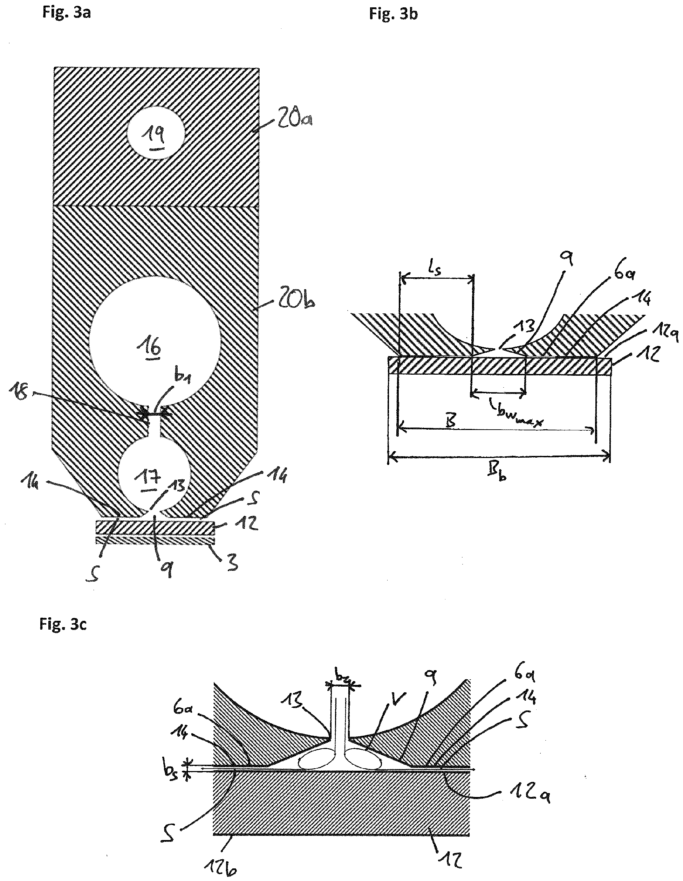

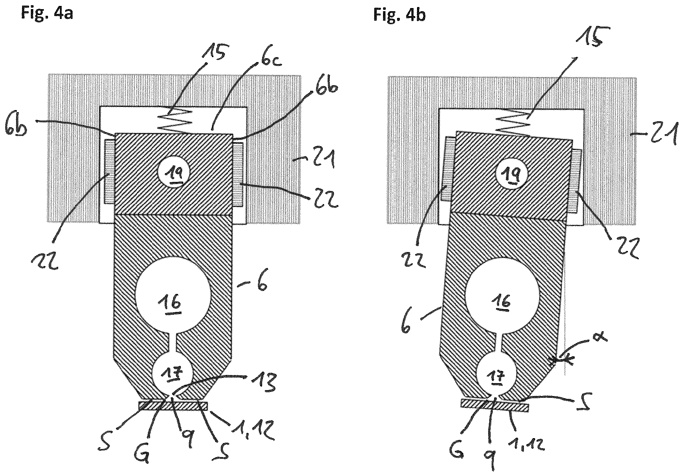

**Fig. 2** zeigt eine perspektivische Seitenansicht einer bevorzugten Ausführungsform der Kühleinrichtung 6 der erfindungsgemäßen Vorrichtung 10 mit einem zugeordneten Schweißband, vorliegend dem äußeren Schweißband 12. Die Kühleinrichtung 6 aufweisend einen vorzugsweise länglichen Kühlkörper 20a,20b (vgl. Fig. 3a) erstreckt sich vorzugsweise längs der Transportrichtung A der Materialbahn 1 bzw. des Schweißbands 12 und parallel bzw. entlang einer Oberfläche 12a des Schweißbands 12 (vgl. auch Fig.1a). Insbesondere ist eine untere Kühlfläche 6a der Kühleinrichtung benachbart zu einer zu kühlenden Oberfläche 12a des Schweißbands 12 angeordnet. Die Kühlfläche 6a weist eine darin geformte und auf die Oberfläche 12a gerichtete und sich parallel zur zu kühlenden Oberfläche erstreckende Verwirbelungszone 9 auf. Die Kühleinrichtung 6 ist ausgebildet, die zu kühlende Oberfläche 12a mit einem verwirbelten und gekühlten Gasvolumenstrom V zu beaufschlagen. Die bereits geformte Rohrform 3 bzw. umgeformte Materialbahn 1 (hier nicht gezeigt) liegt während des Durchlaufens der Kühleinrichtung 6 an einer unteren Oberfläche 12b des Schweißbands 12 an. Eine der Kühlfläche 6a gegenüberliegende Rückseite 6c des Kühlkörpers 20a,20b kann mit Befestigungsmitteln und/oder Kraftbeaufschlagungsmitteln zur Anordnung der Kühleinrichtung 6 in der Vorrichtung 10 versehen sein (vgl. auch Fig. 4a,4b). Die gegenüberliegenden und vorzugsweise parallelen Seitenflächen 6b des Kühlkörpers 20a,20b sind vorzugsweise plan ausgebildet.

Die Kühleinrichtung 6 weist einen Anschluss 8c für Druckgas bzw. Druckluft auf. Dieser ist mit der Vorrichtung zugeordneten Druckgasmitteln, beispielsweise einem Druckgas- bzw. Druckluftkompressor verbunden. Die Kühleinrichtung 6 weist zudem vorzugsweise einen Fluideinlass 8a und einen Fluidauslass 8b auf, mit welchen vorzugsweise gekühltes Fluid, insbesondere Wasser, der Kühleinrichtung zugeführt werden kann. Dieses dient der Kühlung des Kühlkörpers 20b (vgl. Fig. 3a).

**Fig. 3a-3c** zeigen eine bevorzugte Ausführungsform der erfindungsgemäßen Kühleinrichtung 6 in Querschnittsansicht. Die Transportrichtung A der Materialbahn 1 bzw. des Schweißbands 12 erstreckt sich in diesen Figuren senkrecht zur Zeichenebene. Die Kühleinrichtung 6 weist einen Kühlkörper 20a,20b auf, welcher vorzugsweise aus Metall gebildet ist.

Der Kühlkörper weist eine Kühlsektion 20a auf, mit einem darin geführten Kanal 19 für Kühlfluid. Der Kanal 19 steht in fluidtechnischer Verbindung mit dem Fluideinlass 8a und einen Fluidauslass 8b durch welchen beispielsweise Wasser mit einer Temperatur von zwischen 10 und 30°C geführt werden kann. Der Kühlkörper weist zudem eine Gas- bzw Luftsektion 20b auf, welche durch die Kühlsektion 20a vorzugsweise kontinuierlich gekühlt wird.

Der Kühlkörper weist in der Luftsektion 20b eine sich vorzugsweise längs der Kühleinrichtung erstreckende Versorgungskammer 16 auf, welche mit dem Anschluss 8c für Druckgas verbunden ist. Stromabwärts der Versorgungskammer 16 ist vorzugsweise eine Ausgleichskammer 17 angeordnet, welche mit der Versorgungskammer durch einen Spalt 18 verbunden ist. Die Versorgungskammer 16 und die Ausgleichskammer 17 sind vorzugsweise durch sich entlang der Kühleinrichtung in Längsrichtung erstreckende im Wesentlichen zylindrische Ausnehmungen gebildet. Ein Durchmesser der Versorgungskammer 16 liegt vorzugsweise zwischen 5 und 10 mm, mehr bevorzugt zwischen 6 und 8mm. Die Ausgleichskammer 17 weist vorzugsweise ein geringeres Volumen auf als die Versorgungskammer 16. Ein Durchmesser der Ausgleichskammer 17 liegt vorzugsweise zwischen 3 und 8 mm, mehr bevorzugt zwischen 5 und 7mm. Die Breite b₁ des Spalts 18, gemessen in eine Richtung senkrecht zur Transportrichtung A des Schweißbands 12, liegt vorzugsweise zwischen 0,3 und 3mm, mehr bevorzugt zwischen 0,5 und 1,5mm.

Die oben beschriebene Kühlsektion 20a und Luftsektion 20b des Kühlkörpers können als separate und vorzugsweise in thermischer Wirkverbindung stehende Bauteile (gemäß Fig. 3a) ausgebildet sein, oder als ein einteiliges Bauteil bzw. einteiliger Kühlkörper ausgebildet sein.

Die Verwirbelungszone 9 der Kühleinrichtung 6 ist in einer bodenseitigen bzw. endseitigen Kühlfläche 6a der Kühleinrichtung ausgebildet bzw. darin geformt. Diese kann durch einen vorzugsweise konkave Ausnehmung geformt sein. Der Verwirbelungszone 9 ist ein Zufuhrschlitz 13 vorgelagert, welcher mit der Versorgungskammer 16 über die Ausgleichskammer 16 mit Druckgas versorgt werden kann. Der Zufuhrschlitz 13 erstreckt sich entlang der Längsrichtung der Kühleinrichtung 6 und weist vorzugsweise eine Breite b_{Z} auf, gemessen in eine Richtung senkrecht zur Transportrichtung des Schweißbands 12 bzw. der Materialbahn 1, welche zwischen 0,1 bis 0,5mm, mehr bevorzugt zwischen 0,2 bis 0,4 mm liegt. Der Zufuhrschlitz 13 ist vorzugsweise im Wesentlichen einends an einer der zu kühlenden Oberfläche gegenüberliegenden Seite der Verwirbelungszone 9 angeordnet.

Die Verwirbelungszone 9 weist eine sich vorzugsweise von dem Zufuhrschlitz 13 hin zur zugeordneten zu kühlenden Oberfläche 12a stetig vergrößernde Breite b_{W} auf. Die maximale Breite b_{Wmax} der Verwirbelungszone liegt vorzugsweise zwischen 1,5 und 3,5 mm, mehr bevorzugt zwischen 2,0 und 3 mm, besonders bevorzugt bei etwa 2,5mm.

Die Kühlfläche 6a weist einen die Verwirbelungszone 9 umgebende, parallel und/oder benachbart zur zu kühlenden Oberfläche 12a angeordnete Begrenzungsbereich 14 auf. Der Begrenzungsbereich 14 bildet zusammen mit der zu kühlenden Oberfläche 12a einen umlaufenden Austrittsspalt S für den Gasvolumenstrom V zwischen Kühleinrichtung 6 und der zu kühlenden Oberfläche 12a des Schweißbands 12. Die Verwirbelungszone 9 erstreckt sich vorzugsweise mittig entlang des darunter angeordneten bzw. verlaufenden Schweißbandes 12.

Die Kühleinrichtung 6 ermöglicht ein kontaktfreies Kühlen des Schweißbandes 12 und somit der am Schweißband 12 wenigstens teilweise anliegenden Rohrform 3 unter Vermeidung von Reibverschleiß. Die zu kühlende Rohrform 3 erstreckt sich hierbei unterhalb des Schweißbandes 12 (vgl. Fig. 3a). Diese liegt, vorzugsweise mit der darin angeordneten und durch die vorgelagerten Schweißmittel 4 geformte Schweißnaht, an einer der Oberfläche 12a gegenüberliegenden Unterseite 12b des Schweißbandes 12 an.

Der Austrittsspalt S weist eine vorzugsweise im Wesentlichen konstante Breite b_{S} auf, welche zwischen 5 und 100 µm, bevorzugt zwischen 10 und 75 µm, und besonders bevorzugt zwischen 20 und 50 µm liegt. Die Länge I_{S} des Austrittsspalt S senkrecht zur Transportrichtung A des Schweißbands 12 ist mindestens das 0,9-fache, mehr bevorzugt mindestens das 1,3-fache einer maximalen Breite b_{Wmax} der Verwirbelungszone 9. Die Gesamtbreite B der Kühlvorrichtung 6 an der endseitigen Kühlfläche 6a ist vorzugsweise gleich oder mehr bevorzugt kleiner als die Breite B_{b} des Schweißbands 12.

Die in der Verwirbelungszone 9 erzeugte Verwirbelung des Volumenstroms V ist in Fig. 3c dargestellt. Insbesondere wird durch den der Verwirbelungszone 9 und den vorgelagerten Zufuhrschlitz 13 eine deutliche Verwirbelung des gekühlten Gasvolumenstroms V erzielt, welcher direkt auf die Oberfläche 12a des Schweißbands auftrifft. Durch die hierbei auftretende Konvektion wird ein äußerst effektiver Wärmeübergang zwischen der zu kühlenden Oberfläche 12a und dem Kühlkörper 20a,20b erzielt, welcher um ein Vielfaches oberhalb einem Wärmeübergang bei ruhender oder laminarer Luftbeaufschlagung liegt. Die Verwirbelungszone 9 kann insbesondere an deren Innenflächen eine spezifisch ausgeformte Oberflächenstruktur aufweisen, welche die Wirbelbildung im bereitgestellten Gasvolumenstrom bzw. in der Verwirbelungszone 9 zusätzlich fördert.

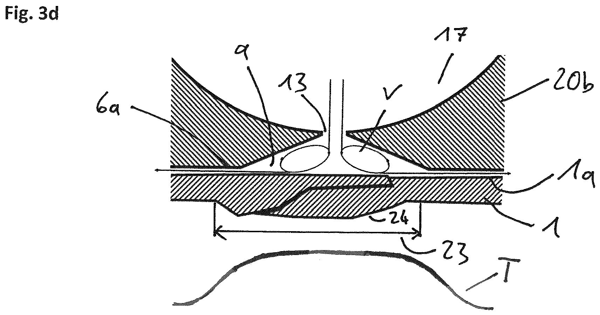

**Fig. 3d** zeigt eine weitere bevorzugte Ausführungsform der Kühleinrichtung 6 bei Anwendung zur direkten Kühlung einer Schweißzone 23 bzw. der in der Schweißzone 23 befindlichen Schweißnaht 24 einer Materialbahn 1. Die oben beschriebene Anordnung der Kühleinrichtung 6 mit der Kühlfläche 6a und der darin geformten Verwirbelungszone 9 und deren Zuordnung gerichtet auf die zu kühlenden Oberfläche gelten für diese Ausführungsbeispiel analog. Statt der Kühlung der verschweißten Materialbahn 1 mittels eines Schweißbandes 12 erfolgt hierbei eine direkte Kühlung einer Oberfläche 1a der verschweißten Materialbahn 1, vorzugsweise mittig ausgerichtet zu der in der verschweißten Materialbahn 1 geformten Schweißnaht 24 und/oder Schweißzone 23.

Ein exemplarischer Temperaturverlauf T innerhalb der verschweißten Materialbahn 1 ist in Fig. 3d dargestellt. Die Temperatur in der Schweißzone der verschweißten Materialbahn 1 kann hierbei nach dem Durchlaufen der Schweißmittel 4 der Vorrichtung 10 über 200°C betragen. Die in Fig. 3a-3d gezeigte Kühleinrichtung 6 kann bezüglich der zu kühlenden Oberfläche 1a,12a ortsfest bzw. unbeweglich angeordnet sein. Hierbei kann die oben genannte Breite bzw. Dicke bs des Austrittsspalts S durch eine Anpassung der Distanz zwischen Kühleinrichtung 6 und zu kühlender Oberfläche 1a,12a vorzugsweise selektiv auf einen gewünschten Wert eingestellt werden.

**Fig. 4a, 4b** zeigen eine weitere bevorzugte Ausführungsform, in welcher die Kühleinrichtung 6 gegenüber der zu kühlenden Oberfläche 1a,12a der Materialbahn 1 bzw. des Schweißbands 12 wenigstens teilweise beweglich angeordnet ist. Hierbei weist die Kühleinrichtung 6 Kraftbeaufschlagungsmittel, vorzugsweise Federmittel 5 auf, welche an einer rückseitigen Oberfläche 6c befestigt oder angeordnet sind. Die Kraftbeaufschlagungsmittel 5 können an einer Lagereinrichtung 21 gelagert sein. Die Kühleinrichtung 6 kann zudem wenigstens teilweise in der Lagereinrichtung 21 geführt sein. Dies kann mittels an den Seitenflächen 6b der Kühleinrichtung angeordneten Führungsstreifen 22 beispielsweise aus Polymermaterial erfolgen. Diese erlauben insbesondere eine vordefinierte begrenzte Verkippung der Kühleinrichtung wie in Fig.4b dargestellt. Ein Verkippen ist vorzugsweise wenigstens um einen Auslenk- bzw. Kippwinkel α gegenüber der Vertikalen von +/-2°, mehr bevorzugt von wenigstens +/-5° möglich. Hierdurch kann sich die Kühleinrichtung im laufenden Betrieb automatisch an eine leicht abweichende Ausrichtung der Materialbahn 1 und/oder des Schweißbandes 12 ausrichten.

Die Kraftbeaufschlagungsmittel 5 sind vorzugsweise ausgebildet, die Kühleinrichtung 6 und insbesondere eine die Verwirbelungszone 9 umgebende Begrenzungsbereich 14 der Kühlfläche 6a gegen die die zu kühlende Oberfläche 1a,12a und gegebenenfalls unter Berücksichtigung des Eigengewichts der Kühleinrichtung 6 vorzuspannen. Hierbei steht die Kühleinrichtung 6 im nicht aktivierten Zustand, d.h. bei fehlendem Gasvolumenstrom V, mit der zu kühlenden Oberfläche 1a,12a in Kontakt. Bei Anlegen eines Gasvolumenstroms V und dem dadurch erzeugtem Druckaufbau in der Verwirbelungszone 9 wird eine Gegenkraft erzeugt, welcher der Vorspannkraft der Kraftbeaufschlagungsmittel 5 entgegenwirkt. Hierdurch bildet sich der oben beschriebene Austrittsspalt S an der die Verwirbelungszone 9 umgebenden Begrenzungsbereich 14 aus. Insbesondere wird hierdurch ein Gaskissen G ausgebildet, dass zwischen der zu kühlenden Oberfläche 1a,12a und der Kühleinrichtung 6 angeordnet ist.

Die Kraftbeaufschlagungsmittel 5 und/oder der durch Gasdruckmittel der Vorrichtung 10 bereitgestellte Gasvolumenstrom sind hierbei vorzugsweise derart aufeinander abgestimmt und/oder einstellbar, dass sich die oben genannten bevorzugten Werte für die Breite bzw. Dicke des Austrittsspalts S zwischen Kühleinrichtung 6 und zu kühlender Oberfläche 1a 12a einstellen.

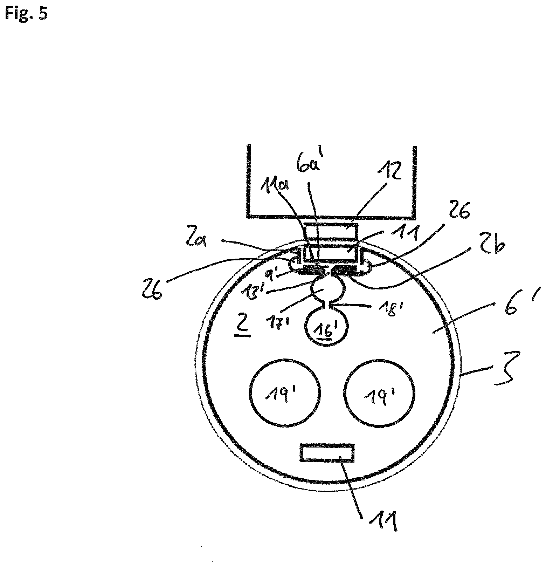

**Fig. 5** zeigt eine Querschnittsansicht durch eine weitere bevorzugte Ausführungsform einer Kühleinrichtung 6`, welche in einem Dorn 2 der Vorrichtung 10, wie in Fig. 1 und 2 gezeigt angeordnet ist. Die Kühleinrichtung 6' ist hierbei dem inneren Schweißband 11 der Vorrichtung 10 bzw. einer zu kühlenden Oberfläche 11a des inneren Schweißbands 11 zugeordnet.

Der Kühlkörper der Kühleinrichtung 6' wird durch den Körper des Dorns 2 gebildet, welcher vorzugsweise aus Metall geformt ist. Dieser kann durch darin geführte Kühlkanäle 19' mit Kühlfluid gekühlt werden. Innerhalb des Dornkörpers sind die Gaszufuhrmittel, insbesondere die Versorgungskammer 16', eine optionale Ausgleichskammer 17' und ein diese verbindender Spalt 18' ausgebildet.

Die Kühlfläche 6a' ist durch einen Nutenboden 2b einer im Dorn ausgebildeten Längsnut 2a geformt, in welcher das innere Schweißband 11 geführt ist. Die Verwirbelungszone 9' ist in der Kühlfläche 6a' bzw. im Nutenboden 2b ausgebildet und mit den Gaszufuhrmittel 16`,17`, den diese verbindender Spalt 18`, und durch den Zufuhrschlitz 13' verbunden. Die Längsnut 2a weist vorzugsweise wenigstens einen, mehr bevorzugt wenigstens zwei Abführkanäle 26 zur Abfuhr des Gasvolumenstroms aus der Längsnut 2a auf.

Die oben beschriebenen Ausführungsformen sind lediglich beispielhaft, wobei die Erfindung keineswegs auf die in den Figuren gezeigten Ausführungsformen beschränkt ist. Insbesondere können die gezeigten beispielhaften Ausführungsformen auch untereinander kombiniert werden, soweit der entstehende Gegenstand zum Umfang der Ansprüche gehört.

## Patentansprüche

1. Kühleinrichtung (6) für die Verwendung in einer Vorrichtung (10) zum Herstellen von Tubenkörpern für Verpackungstuben aus einer um einen Dorn (2) umformbaren, verschweißbaren und vorzugsweise kontinuierlich zugeführten Materialbahn (1), aufweisend
einen sich länglich erstreckenden vorzugsweise aus Metall geformten Kühlkörper (20a,20b) mit einer vorzugsweise endseitig angeordneten Kühlfläche (6a) zur Zuordnung an eine zu kühlende Oberfläche (1a,11a,12a) der Materialbahn (1) der Vorrichtung (10) oder eines umlaufend antreibbaren und der Materialbahn (1) zugeordneten Schweißbands (11,12) der Vorrichtung (10), **dadurch gekennzeichnet, dass** der Kühlkörper (20a,20b) eine in der Kühlfläche (6a) geformte Verwirbelungszone (9) aufweist, welche zur Bereitstellung eines verwirbelten Gasvolumenstroms (V) zwischen der zu kühlenden Oberfläche (1a,11a,12a) und dem Kühlkörper (20a,20b) ausgebildet ist, wobei die Verwirbelungszone (9) durch eine vorzugsweise im Wesentlichen konkave Ausnehmung in der der Materialbahn (1) oder dem Schweißband (11,12) zugeordneten Kühlfläche (6a) gebildet ist, welche eine sich von einem Zufuhrschlitz (13) zur Materialbahn (1) bzw. zum Schweißband (11,12) hin erweiternde Breite (b_{W}) aufweist.

2. Kühleinrichtung nach Anspruch 1, **dadurch gekennzeichnet, dass** ein die Verwirbelungszone (9) mit Gasvolumenstrom speisender Zufuhrschlitz (13) eine maximale Breite (b_{Z}) von 0,1 bis 0,5mm, mehr bevorzugt von 0,2 bis 0,4 mm aufweist.

3. Kühleinrichtung nach Anspruch 1 oder 2, **dadurch gekennzeichnet, dass** die Kühleinrichtung (6) eine vorzugsweise rückseitig zur Kühlfläche (6a) angeordnete Kühlsektion (20a) vorzugsweise mit einem darin geführten Kanal (19) für Kühlfluid aufweist.

4. Kühleinrichtung nach einem der vorhergehenden Ansprüche, **dadurch gekennzeichnet, dass** der Kühlkörper (20a,20b) der Kühleinrichtung (6) ein Metallkörper ist, insbesondere ein Aluminiumkörper.

5. Kühleinrichtung nach einem der vorhergehenden Ansprüche, **dadurch gekennzeichnet, dass** die Kühleinrichtung (6) eine mit dem Zufuhrschlitz (13) zur Verwirbelungszone (9) fluidtechnisch verbundene Versorgungskammer (16), welche mit einer Gaszufuhr der Kühleinrichtung (6) verbindbar ist und optional eine zwischen der Versorgungskammer (16) und dem Zufuhrschlitz (13) angeordnete Ausgleichskammer (17) aufweist.

6. Vorrichtung (10) zum Herstellen von Tubenkörpern für Verpackungstuben aus einer Materialbahn (1), aufweisend
einen sich in axialer Richtung erstreckenden Dorn (2), um welchen die Materialbahn (1) zur Herstellung einer Rohrform (3) umformbar ist,
Schweißmittel (4) zum Verschweißen der Materialbahn (1) bevorzugt in einer Schweißzone (23) der Materialbahn (1) und entlang einer Transportrichtung (A) der Materialbahn (1), und
eine den Schweißmitteln (4) nachgelagerte Kühleinrichtung (6) nach einem der vorhergehenden Ansprüche zum Abkühlen der verschweißten Materialbahn (1), wobei sich der Kühlkörper (20a,20b) der Kühleinrichtung (6) entlang der Materialbahn (1) erstreckt.

7. Vorrichtung nach Anspruch 6, **dadurch gekennzeichnet, dass** die Kühlfläche (6a) eine vorzugsweise die Verwirbelungszone (9) umgebende, parallel und/oder benachbart zur Materialbahn (1) bzw. zum Schweißband (11,12) angeordneten Begrenzungsbereich (14) zur Ausbildung eines vorzugsweise umlaufenden Austrittsspalts (S) zwischen Kühlfläche (6a) und Materialbahn (1) bzw. Schweißband (11,12) aufweist.

8. Vorrichtung nach Anspruch 7, **dadurch gekennzeichnet, dass** der Austrittsspalt (S) eine vorzugsweise im Wesentlichen konstante Breite (b_{S}) zwischen Kühlfläche (6a) und Materialbahn (1) bzw. Schweißband (11,12) von zwischen 5 und 100 µm, bevorzugt zwischen 20 und 75 µm, mehr bevorzugt zwischen 20 und 50 µm aufweist.

9. Vorrichtung nach Anspruch 7 oder 8, **dadurch gekennzeichnet, dass** eine Länge (I_{S}) des Austrittsspalts (S) in eine Richtung senkrecht zur Materialbahntransportrichtung (A) mindestens das 0,9-fache, mehr bevorzugt mindestens das 1,3-fache einer maximalen Breite (b_{Wmax}) der Verwirbelungszone (9) senkrecht zur Materialbahntransportrichtung (A) beträgt.

10. Vorrichtung nach einem der Ansprüche 6 bis 9, **dadurch gekennzeichnet, dass** die Kühleinrichtung (6) derart ausgebildet ist, ein Gaskissen (G) zwischen der Materialbahn (1) bzw. dem Schweißband (11,12) und der Kühlfläche (6a), insbesondere in einem Bereich der Verwirbelungszone (9) und einem die Verwirbelungszone (9) umgebenden Begrenzungsbereich (14) der Kühlfläche (6a), durch die Beaufschlagung mit dem Gasvolumenstrom (V) auszubilden.

11. Vorrichtung nach einem der Ansprüche 6 bis 10, **dadurch gekennzeichnet, dass** die Kühleinrichtung (6) Kraftbeaufschlagungsmittel (15) aufweist, welche ausgebildet sind, die Kühleinrichtung (6) und insbesondere einen die Verwirbelungszone (9) umgebenden Begrenzungsbereich (14) der Kühlfläche (6a) gegen die Materialbahn (1) bzw. gegen das Schweißband (11,12) vorzuspannen.

12. Vorrichtung nach einem der Ansprüche 6 bis 11, **dadurch gekennzeichnet, dass** die Vorrichtung (10) ausgebildet ist, die Materialbahn (1) bzw. das Schweißband (11,12) mit einem Gasvolumenstrom (V) aufweisend eine Geschwindigkeit von 50 bis 500 km/h, mehr bevorzugt von 100 bis 400 km/h, zu beaufschlagen.

13. Vorrichtung nach einem der Ansprüche 6 bis 12, **dadurch gekennzeichnet, dass** der erzielte Wärmeübergang zwischen Materialbahn (1) und Kühlkörper (20a,20b) bzw. zwischen Schweißband (11,12) und Kühlkörper (20b) mehr als 500 W/m²K, mehr bevorzugt mehr als 1000 W/m²K beträgt.

14. Vorrichtung nach einem der Ansprüche 6 bis 13, **dadurch gekennzeichnet, dass** insgesamt zwei Schweißbänder (11,12) derart vorgesehen sind, dass die Materialbahn (1) zwischen den Schweißbändern (11,12) sandwichartig aufnehmbar ist und/oder die Kühleinrichtung (6) wenigstens einem der Schweißbänder (11,12) an einer der Materialbahn (1) abgewandten Schweißbandoberfläche (11a, 12a), zugeordnet ist.

15. Verfahren zum Betreiben einer Vorrichtung (1) zum Herstellen von Tubenkörpern aus einer Materialbahn (1) nach einem der Ansprüche 6 bis 14, **dadurch gekennzeichnet, dass** die Materialbahn (1) oder ein der Materialbahn (1) zugeordnetes Schweißband (11,12) mit verwirbeltem und vorzugsweise unter Druck stehendem Gasvolumenstrom (V) beaufschlagt wird.

16. Verfahren nach Anspruch 15, **dadurch gekennzeichnet, dass** ein Gaskissen (G) zwischen der Materialbahn (1) bzw. dem Schweißband (11,12) und der Kühlfläche (6a), insbesondere in einem Bereich der Verwirbelungszone (9) und einem die Verwirbelungszone (9) umgebenden Begrenzungsbereich (14) der Kühlfläche (6a), durch ein Einstellen eines Gasvolumens und/oder eines Gasdrucks auf eine Dicke zwischen 5 und 100 µm, bevorzugt zwischen 20 und 75 µm, und mehr bevorzugt zwischen 20 und 50 µm und vorzugsweise gegen einen anliegende Vorspannungskraft von Kraftbeaufschlagungsmitteln (15) eingestellt wird.

## Claims

1. A cooling unit (6) for use in a device (10) for producing tube bodies for packaging tubes from a sealable material web (1), the material web (1) being deformable about a mandrel (2) and preferably being supplied continuously, the cooling unit (6) comprising
a longitudinally extending cooling element (20a, 20b), which is preferably made of metal and which has a cooling surface (6a), which is preferably disposed at the end thereof and serves to be placed against a surface (1a, 11a, 12a) to be cooled of the material web (1) of the device (10) or of a sealing strip (11, 12) of the device (10), the sealing strip (11, 12) being associated with the material web (1) and being configured to be driven in a revolving manner,
**characterized in that** the cooling element (20a, 20b) has a turbulence zone (9) formed in the cooling surface (6a), the turbulence zone (9) being configured to provide a turbulent gas volume flow (V) between the surface (1a, 11a, 12a) to be cooled and the cooling element (20a, 20b), the turbulence zone (9) being formed by a preferably essentially concave recess in the cooling surface (6a) associated with the material web (1) or the sealing strip (11, 12), the recess having a width (bw) which increases from a feeding slot (13) to the material web (1) or the sealing strip (11, 12).

2. The cooling unit according to claim 1, **characterized in that** a feeding slot (13) supplying the turbulence zone (9) with the gas volume flow has a maximum width (bz) of 0.1 mm to 0.5 mm, more preferably 0.2 mm to 0.4 mm.

3. The cooling unit according to claim 1 or 2, **characterized in that** the cooling unit (6) has a cooling section (20a), which is preferably disposed to the rear of the cooling surface (6a) and which preferably has a channel (19) for cooling fluid running therein.

4. The cooling unit according to any one of the preceding claims, **characterized in that** the cooling element (20a, 20b) of the cooling unit (6) is a metal body, in particular an aluminum element.

5. The cooling unit according to any one of the preceding claims, **characterized in that** the cooling unit (6) has a supply chamber (16) in fluid communication with the feeding slot (13) to the turbulence zone (9), the supply chamber (16) being configured to be connected to a gas supply of the cooling unit (6) and optionally having a compensation chamber (17) disposed between the supply chamber (16) and the feeding slot (13).

6. A device (10) for producing tube bodies for packaging tubes from a material web (1), the device (10) comprising
an axially extending mandrel (2) around which the material web (1) is deformable to produce a tubular shape (3),
sealing means (4) for sealing the material web (1) preferably in a sealing zone (23) of the material web (1) and along a transport direction (A) of the material web (1), and
a cooling unit (6) according to any one of the preceding claims for cooling the sealed material web (1), the cooling unit (6) being disposed downstream of the sealing means (4), the cooling element (20a, 20b) of the cooling unit (6) extending along the material web (1).

7. The device according to claim 6, **characterized in that** the cooling surface (6a) has a limiting area (14) disposed parallel and/or adjacent to the material web (1) or the sealing strip (11, 12) and preferably surrounding the turbulence zone (9), the limiting area (13) serving to form a preferably circumferential exit gap (S) between the cooling surface (6a) and the material web (1) or the sealing strip (11, 12).

8. The device according to claim 7, **characterized in that** the exit gap (S) has a preferably essentially constant width (bs) of between 5 µm and 100 µm, preferably between 20 µm and 75 µm, more preferably between 20 µm and 50 µm, between the cooling surface (6a) and the material web (1) or the sealing strip (11, 12).

9. The device according to claim 7 or 8, **characterized in that** a length (Is) of the exit gap (S) in a direction perpendicular to the material web transport direction (A) is at least 0.9 times, more preferably at least 1.3 times, a maximum width (b_{Wmax}) of the turbulence zone (9) perpendicular to the material web transport direction (A).

10. The device according to any one of claims 6 to 9, **characterized in that** the cooling unit (6) is configured to form a gas cushion (G) between the material web (1) or the sealing strip (11, 12) and the cooling surface (6a), in particular in an area of the turbulence zone (9) and a limiting area (14) of the cooling surface (6a) surrounding the turbulence zone (9), by applying the gas volume flow (V).

11. The device according to any one of claims 6 to 10, **characterized in that** the cooling unit (6) comprises force exerting means (15) configured to pre-load the cooling unit (6) and in particular a limiting area (14) of the cooling surface (6a) surrounding the turbulence zone (9) against the material web (1) or the sealing strip (11, 12).

12. The device according to any one of claims 6 to 11, **characterized in that** the device (10) is configured to apply a gas volume flow (V) having a speed of 50 km/h to 500 km/h, more preferably 100 km/h to 400 km/h, to the material web (1) or the sealing strip (11, 12).

13. The device according to any one of claims 6 to 12, **characterized in that** the heat transfer achieved between the material web (1) and the cooling element (20a, 20b) or between the sealing strip (11, 12) and the cooling element (20b) is more than 500 W/m₂K, more preferably more than 1000 W/m₂K.

14. The device according to any one of claims 6 to 13, **characterized in that** a total of two sealing strips (11, 12) are provided in such a manner that the material web (1) is sandwiched between the sealing strips (11, 12) and/or the cooling unit (6) is associated with at least one of the sealing strips (11, 12) on a sealing strip surface (11a, 12a) facing away from the material web (1).

15. A method for operating a device (1) according to any one of claims 6 to 14 for producing tube bodies from a material web (1), **characterized in that** the material web (1) or a sealing strip (11, 12) associated with the material web (1) is exposed to a turbulent and preferably pressurized gas volume flow (V).

16. The method according to claim 15, **characterized in that** a gas cushion (G) between the material web (1) or the sealing strip (11, 12) and the cooling surface (6a), in particular in an area of the turbulence zone (9) and a limiting area (14) of the cooling surface (6a) surrounding the turbulence zone (9), is set to a thickness between 5 µm and 1000 µm, preferably between 20 µm and 75 µm and more preferably between 20 µm and 50 µm and preferably against a pre-load force exerted by force exerting means (15), by setting a gas volume and/or a gas pressure.

## Revendications

1. Refroidisseur (6) pour l'utilisation dans un dispositif (10) destiné à produire des corps tubulaires pour des tubes d'emballage à partir d'une bande de matériau (1) scellable, la bande de matériau (1) étant déformable autour d'un mandrin (2) et étant de préférence fourni continûment, le refroidisseur (6) comprenant
un dissipateur de chaleur (20a, 20b) qui s'étend longitudinalement et qui est fait de préférence en métal et qui a une surface de refroidissement (6a), qui est disposée de préférence à l'extrémité de celui-ci et qui sert à être appliquée à une surface (1a, 11a, 12a) à refroidir de la bande de matériau (1) du dispositif (10) ou d'une bande de scellage (11, 12) du dispositif (10), la bande de scellage (11, 12) étant associée à la bande de matériau (1) et étant configurée pour être entraînée en circulation,
**caractérisé en ce que** le dissipateur de chaleur (20a, 20b) a une zone de tourbillonnement (9) formée dans la surface de refroidissement (6a), la zone de tourbillonnement (9) étant configurée pour fournir un débit de gaz (V) tourbillonné entre la surface (1a, 11a, 12a) à refroidir et le dissipateur de chaleur (20a, 20b), la zone de tourbillonnement (9) étant formée par un évidement de préférence essentiellement concave dans la surface de refroidissement (6a) associée à la bande de matériau (1) ou à la bande de scellage (11, 12), l'évidement ayant une largeur (bw) qui augmente à partir d'une fente d'alimentation (13) vers la bande de matériau (1) ou la bande de scellage (11, 12).

2. Refroidisseur selon la revendication 1, **caractérisé en ce qu'**une fente d'alimentation (13) alimentant la zone de tourbillonnement (9) en débit de gaz à une largeur maximale (bz) de 0,1 mm à 0,5 mm, ou mieux 0,2 mm à 0,4 mm.

3. Refroidisseur selon la revendication 1 ou 2, **caractérisé en ce que** le refroidisseur (6) a une section de refroidissement (20a), qui est de préférence disposée à l'arrière de la surface de refroidissement (6a) et qui a de préférence un canal (19) pour un fluide de refroidissement s'étendant dans celle-ci.

4. Refroidisseur selon l'une quelconque des revendications précédentes, **caractérisé en ce que** le dissipateur de chaleur (20a, 20b) du refroidisseur (6) est un élément métallique, notamment un élément en aluminium.

5. Refroidisseur selon l'une quelconque des revendications précédentes, **caractérisé en ce que** le refroidisseur (6) a une chambre d'alimentation (16) en communication fluidique avec la fente d'alimentation (13) vers la zone de tourbillonnement (9), la chambre d'alimentation (16) étant configurée pour être liée à une alimentation de gaz du refroidisseur (6) et ayant optionnellement une chambre de compensation (17) disposée entre la chambre d'alimentation (16) et la fente d'alimentation (13).

6. Dispositif (10) destiné à produire des corps tubulaires pour des tubes d'emballage à partir d'une bande de matériau (1), le dispositif (10) comprenant
un mandrin (2) qui s'étend dans la direction axiale et autour duquel la bande de matériau (1) est déformable afin de produire une forme tubulaire (3),
des moyens de scellage (4) pour sceller la bande de matériau (1) de préférence dans une zone de scellage (23) de la bande de matériau (1) et le long d'une direction de transport (A) de la bande de matériau (1) et
un refroidisseur (6) selon l'une quelconque des revendications précédentes pour refroidir la bande de matériau (1) scellée, le refroidisseur (6) étant disposé en aval des moyens de scellage (4), le dissipateur de chaleur (20a, 20b) du refroidisseur (6) s'étendant le long de la bande de matériau (1).

7. Dispositif selon la revendication 6, **caractérisé en ce que** la surface de refroidissement (6a) a une zone de limitation (14) parallèle et/ou adjacente à la bande de matériau (1) ou la bande de scellage (11, 12) et entourant de préférence la zone de tourbillonnement (9), la zone de limitation (13) servant à former une fente de sortie (S) de préférence circonférentielle entre la surface de refroidissement (6a) et la bande de matériau (1) ou la bande de scellage (11, 12).

8. Dispositif selon la revendication 7, **caractérisé en ce que** la fente de sortie (S) a une largeur (bs) de préférence essentiellement constante d'entre 5 µm et 100 µm, de préférence entre 20 µm et 75 µm, ou mieux entre 20 µm et 50 µm, entre la surface de refroidissement (6a) et la bande de matériau (1) ou la bande de scellage (11, 12).

9. Dispositif selon la revendication 7 ou 8, **caractérisé en ce qu'**une longueur (I_{S}) de la fente de sortie (S) dans une direction perpendiculaire à la direction de transport (A) de la bande de matériau est au moins 0,9 fois, ou mieux au moins 1,3 fois, une largueur maximale (b_{Wmax}) de la zone de tourbillonnement (9) perpendiculaire à la direction de transport (A) de la bande de matériau.

10. Dispositif selon l'une quelconque des revendications 6 à 9, **caractérisé en ce que** le refroidisseur (6) est configuré pour former un coussin de gaz (G) entre la bande de matériau (1) ou la bande de scellage (11, 12) et la surface de refroidissement (6a), notamment dans une région de la zone de tourbillonnement (9) et une zone de limitation (14) de la surface de refroidissement (6a) entourant la zone de tourbillonnement (9), en appliquant le débit de gaz (V).

11. Dispositif selon l'une quelconque des revendications 6 à 10, **caractérisé en ce que** le refroidisseur (6) comprend des moyens d'exercice de force (15) configurés pour précharger le refroidisseur (6) et notamment une zone de limitation (14) de la surface de refroidissement (6a) entourant la zone de tourbillonnement (9) contre la bande de matériau (1) ou la bande de scellage (11, 12).

12. Dispositif selon l'une quelconque des revendications 6 à 11, **caractérisé en ce que** le dispositif (10) est configuré pour appliquer un débit de gaz (V) ayant une vitesse de 50 km/h à 500 km/h, ou mieux 100 km/h à 400 km/h, à la bande de matériau (1) ou la bande de scellage (11, 12).

13. Dispositif selon l'une quelconque des revendications 6 à 12, **caractérisé en ce que** le transfert de chaleur effectué entre la bande de matériau (1) et le dissipateur de chaleur (20a, 20b) ou entre la bande de scellage (11, 12) et le dissipateur de chaleur (20b) est supérieur à 500 W/m₂K, ou mieux supérieur à 1000 W/m₂K.

14. Dispositif selon l'une quelconque des revendications 6 à 13, **caractérisé en ce qu'**au total deux bandes de scellage (11, 12) sont fournies de telle manière que la bande de matériau (1) est prise en sandwich entre les bandes de scellage (11, 12) et/ou le refroidisseur (6) est associé à au moins une des bandes de scellage (11, 12) sur une surface de bande de scellage (11a, 12a) détournée de la bande de matériau (1).

15. Procédé de faire fonctionner un dispositif (1) selon l'une quelconque des revendications 6 à 14 pour produire des corps tubulaires à partir d'une bande de matériau (1), **caractérisé en ce que** la bande de matériau (1) ou une bande de scellage (11, 12) associée à la bande de matériau (1) est exposée à un débit de gaz (V) tourbillonné et de préférence pressurisé.

16. Procédé selon la revendication 15, **caractérisé en ce qu'**un coussin de gaz (G) entre la bande de matériau (1) ou la bande de scellage (11, 12) et la surface de refroidissement (6a), notamment dans une région de la zone de tourbillonnement (9) et dans une zone de limitation (14) de la surface de refroidissement (6a) entourant la zone de tourbillonnement (9), est mis à une épaisseur entre 5 µm et 1000 µm, de préférence entre 20 µm et 75 µm, ou mieux entre 20 µm et 50 µm et de préférence contre une force de précharge appliquée par des moyens d'exercice de force (15), en réglant une volume de gaz et/ou une pression de gaz.
